Europäisches Patentamt

European Patent Office

Office européen des brevets

(19)

(11) Veröffentlichungsnummer: **0 240 782 B1**

(12) **EUROPÄISCHE PATENTSCHRIFT**

(45) Veröffentlichungstag der Patentschrift: **08.05.91**

(21) Anmeldenummer: **87103851.9**

(22) Anmeldetag: **17.03.87**

(51) Int. Cl.⁵: **G01C 17/28**, G01C 17/18, H01Q 1/44, H01Q 1/10

(54) **Halterung einer Magnetfeldsonde für Navigationszwecke an einem Kraftfahrzeug.**

(30) Priorität: **26.03.86 DE 3610336**

(43) Veröffentlichungstag der Anmeldung: **14.10.87 Patentblatt 87/42**

(45) Bekanntmachung des Hinweises auf die Patenterteilung: **08.05.91 Patentblatt 91/19**

(84) Benannte Vertragsstaaten: **AT BE CH DE ES FR GB IT LI NL SE**

(56) Entgegenhaltungen:
**DE-A- 3 335 246**
**FR-A- 1 018 649**
**US-A- 3 331 234**
**US-A- 3 380 062**
**US-A- 4 037 328**

(73) Patentinhaber: **Siemens Aktiengesellschaft Wittelsbacherplatz 2 W-8000 München 2(DE)**

(72) Erfinder: **Drücker, Gerhard, Dipl.-Ing. Bismarkstrasse 59 W-7303 Neuhausen(DE)**
Erfinder: **Burghoff, Heinz-Georg, Dr. Breslauer Strasse 3 W-7313 Reichenbach(DE)**
Erfinder: **Häussermann, Peter, Dipl.-Ing. Potsdamer Ring 14 W-7150 Backnang(DE)**
Erfinder: **Wuttke, Gero, Ing.grad. Eichendorffstrasse 54 A W-8400 Regensburg(DE)**
Erfinder: **Schlemmer, Torsten, Dipl.-Ing. Dieselstrasse 19 W-8000 München 50(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zur Bestimmung der Position von Fahrzeugen wird seit langem das sogenannte Koppelnavigationsverfahren eingesetzt, bei dem während der Fahrt ständig die Wegstrecke und die Fahrtrichtung des Kraftfahrzeuges gemessen werden. Die Fahrtrichtung des Kraftfahrzeuges wird üblicherweise durch eine Messung des Erdmagnetfeldes mit Hilfe einer Magnetfeldsonde bestimmt. Störend auf die Messung der Erdfeldrichtung wirken sich magnetische Störfelder aus, die zum Teil durch das Fahrzeug selbst erzeugt werden, z.B. durch Karosserieteile oder durch magnetische Felder, die durch elektrische Ströme im Fahrzeug entstehen.

Durch FR-A-1 018 649 ist bereits die im Oberbegriff des Patentanspruches 1 definierte Anordnung vorbekannt. Zur Richtungsbestimmung eines Fahrzeugs wird dort als Magnetfeldsensor ein Induktionsanker eingesetzt, welcher das Magnetfeld der Erde ermittelt. Der Induktionsanker sitzt am Ende eines als Distanzstück dienenden Hohlmastes, welcher die Aufgabe hat, den Anker in störungssicherem Abstand von der Karosserie des Fahrzeugs zu halten und welcher auch als Antenne dienen kann. Der Sondenträger bzw. das Distanzstück ist nicht in die Karosserie versenkbar und gehört auch nicht zu einer Teleskopeinrichtung mit mindestens einem Teleskopelement. Darüberhinaus hält das Führungsstück im Betriebszustand der Magnetfeldsonde nicht das Distanzstück und damit auch nicht die Magnetfeldsonde verdrehsicher fest. Statt dessen wird das dortige Distanzstück von einem Motor gedreht. Außerdem sind auch die Führungsteile an der Karosserie nicht so verdrehsicher angebracht, daß sich das davon gehaltene Distanzstück und damit die Magnetfeldsonde nicht mehr dreht. Ferner sind dort Zuleitungen zu der Magnetfeldsonde nicht in einem verdrehsicher festgehaltenem Stück untergebracht.

In US-A-3 331 234 ist ein Sondenträger für einen Magnetfeldsensor, hier eine Kompaßnadel, angegeben. Der Sondenträger dient zur Justierung eines im Inneren eines Fahrzeugs angebrachten Gyrokompasses. Der Sondenträger kann per Handgriff aus dem Fahrzeug in einen störungsfreien Bereich gezogen werden und ist über eine Leitung mit der Auswerteeinrichtung im Fahrzeug verbunden. Das Distanzstück wird durch ein flexibles Seil, Band oder dergleichen gebildet und stellt also keine Teleskopeneinrichtung dar. Das Distanzstück ist nicht einmal steif und daher nicht verdrehsicher an der Karosserie festgehalten.

Durch DE-A1-33 35 246 ist ein mechanischer Positionsfühler zum Ermitteln der Endpositionen einer mit einem Gleichstrommotor angetriebenen Teleskopantenne bekannt, zu welcher eine Umschalteeinrichtung für die Umpolung des Gleichstrommotors gehört. Es handelt sich also um eine Anordnung zum Senden bzw. Empfangen von elektromagnetischen Wellen. Der Positonsfühler besteht aus einem auf der Motorachse angebrachten Sperrad, das über einen Mitnehmer ein Zählrad bewegt. An letzterem sind Schaltkörper angebracht, die ihrerseits einen Umschaltfederkontaktsatz betätigen.

Durch US-A-3 380 062 ist eine andere spezielle Teleskopantenne angegeben, bei welcher die einzelnen Teleskopelemente durch eine Schraubenfeder verbunden sind, um einen optimalen elektrischen Kontakt zwischen den einzelnen Teleskopelementen zu gewährleisten. Es handelt sich also ebenfalls um eine Einrichtung zum Senden bzw. Empfangen von elektromagnetischen Wellen. Mittels einer Kontaktfeder wird die Endposition der Antenne bestimmt. Diese Kontaktfeder dient also als Positionsfühler zur Ermittlung einer Endposition der Teleskopantenne.

Durch EP-A1-0 067 357 ist bekannt, die durch Störfelder bedingte Mißweisung einer Magnetfeldsonde durch die sorgfältige Auswahl des Einbauorts am Fahrzeug zu minimieren. Hierzu ist die Magnetfeldsonde an einem Sondenträger im Abstand von der Karosserie des Fahrzeugs angeordnet. Ein solcher Sondenträger und die an ihr angebrachte Magnetfeldsonde sind aber durch ihre exponierte Lage gefährdet. Beispielsweise kann Halterung oder Magnetfeldsonde beim Durchfahren einer Waschanlage beschädigt werden.

Die Aufgabe der Erfindung ist es,
- den Sondenträger und die Magnetfeldsonde für Navigationszwecke an einem Kraftfahrzeug derart anzuordnen, daß eine Gefährdung von Sondenträger und Magnetfeldsonde vermieden wird;
- die Meßgenauigkeit bei der Ermittlung der Fahrtrichtung besonders groß zu machen; sowie
- eine hohe Sicherheit gegen Dejustieren der Sonde im ausgefahrenen Zustand des Sondenträgers zu erreichen.

Diese Aufgabe wird durch den im Patentanspruch 1 definierten Gegenstand gelöst.

Erfindungsgemäß ist diese Aufgabe in einer gattungsgemäßen Anordnung also dadurch gelöst, daß der Sondenträger, neben den anderen Merkmalen im kennzeichnenden Teil des Patentanspruchs 1, in die Karosserie versenkbar ist. Hierzu kann der Sondenträger in die Karosserie ein- und ausschwenkbar gestaltet sein. Vorzugsweise ist er jedoch manuell ein-und ausziehbar oder automatisch ein- und ausfahrbar ausgebildet.

Zweckmäßigerweise besteht der Sondenträger aus einem Distanzstück, welches dafür sorgt, daß die Magnetfeldsonde den erforderlichen Abstand zur Kraftfahrzeugkarosserie einhält. An ihm ist eine Sondenkapsel befestigt, in der die Magnetfeldsonde untergebracht ist und die die Aufgabe hat, die Magnetfeldsonde zu schützen.

Sondenkapsel und Distanzstück können ebenfalls eine Störquelle für die Messung des Erdmagnetfeldes darstellen. Daher ist es zweckmäßig, für diese Teile Materialien zu verwenden, die keine ferro- oder ferrimagnetischen Eigenschaften zeigen. Insbesondere sind Materialien einsetzbar, die eine vernachlässigbar geringe magnetische Remanenz aufweisen, so daß die besonders störenden Magnetfelder, die durch eine Remanenz entstehen, vermieden werden. Beispielsweise könnte das Distanzstück und/oder die Sondenkapsel aus Messing oder Aluminium aber auch aus Kunststoff bestehen.

Profil und/oder Material des Sondenträgers sind so gewählt, daß sich eine ausreichende Steifigkeit und Stabilität gegenüber mechanischen Schwingungen und mechanischen Belastungen ergibt. Dadurch läßt sich ein Meßfehler durch Auslenkungen der Magnetfeldsonde weitgehend vermeiden.

Die Form der Sondenkapsel hängt vom Typ und den Abmessungen der eingesetzten Magnetfeldsonde ab und kann als Ausleger ausgebildet sein. Der Ausleger kann am Distanzstück in seiner räumlichen Lage - z.B. durch ein arretierbares Gelenk - voll beweglich angebracht sein, so daß eine optimale Justage der Magnetfeldsonde in Bezug auf Längs- und Querachse des Fahrzeuges ermöglicht ist.

Das Distanzstück des Sondenträgers ist als Teleskopeinrichtung mit mindestens einem Teleskopelement ausgebildet. Die Teleskopeinrichtung ist verdrehsicher in einem Führungsteil geführt, damit sich die Ausrichtung der Magnetfeldsonde gegenüber der Fahrzeugachse nicht ändern kann. Die Verdrehsicherung der Teleskopeinrichtung im Führungsteil wird dadurch erreicht, daß die äußere geometrische Formgebung der Teleskopeinrichtung und des Führungsteils aufeinander so abgestimmt sind, daß ein Verdrehen der Teleskopeinrichtung im Führungsteil nicht möglich ist. Zum Beispiel könnte der Umriß des äußersten Teleskopelements und der dazugehörige Umriß des Führungsteils planparallele Flächen besitzen, die eine Verdrehung des äußersten Teleskopelements gegenüber dem Führungsteil verhindern. Zur verdrehsicheren Führung des äußersten Teleskopelements bzw. der Teleskopeinrichtung im Führungsteil kann alternativ auch ein Feder/Nutsystem dienen. Das Führungsteil selbst ist an der Karosserie verdrehsicher angebracht.

Zum Ein- und Ausschwenken oder Ein- und Ausfahren des Sondenträgers dient ein Antriebssystem. Dieses kann pneumatisch, hydraulisch oder elektromechanisch mit Hilfe eines Elektromotors und eines nachgeschalteten Getriebes ausgeführt sein.

Es ist vorteilhaft, mit Hilfe von Positionsfühlern zu überprüfen, ob der Sondenträger seine Endposition im versenkten Zustand oder im nichtversenkten Zustand erreicht hat. Ein solcher Positionsfühler kann berührungslos arbeiten, z.B. auf induktiver oder elektrooptischer Basis oder einfach als mechanischer Schalter ausgeführt sein. Der Positionsfühler, der die Endposition beim Ausfahren der Teleskopeinrichtung feststellen soll, hat die Aufgabe, bei Erreichen der Endposition das Antriebssystem abzuschalten. Weiterhin können die Signale der Positionsfühler auch dazu verwendet werden, einer nachgeschalteten Elektronik Informationen über die Bewegung des Sondenträgers bzw. der Teleskopeinrichtung zur Verfügung zu stellen. Zum Beispiel kann ein Mikroprozessorsystem die Signale der Positionsfühler auswerten und die jeweilige Position dem Fahrer des Fahrzeuges, z.B. auf einem Display, melden. Mit Hilfe von Positionsfühlern können auch beliebige Haltepositionen der Ausfahr- bzw. Einfahrbewegung detektiert und angesteuert werden.

Zur Fixierung des Sondenträgers nach Erreichen einer Endposition ist die Anwendung von mindestens einer Arretierungseinrichtung zweckmäßig. Diese hat die Aufgabe, den Sondenträger mechanisch festzuhalten.

Falls der Sondenträger aus einer Teleskopeinrichtung mit mehreren, ineinander einschiebbaren Teleskopelementen besteht, ist eine Kupplung zwischen Antriebssystem und Teleskopeinrichtung von Vorteil, insbesondere, wenn einzelne Teleskopelemente getrennt von den anderen bewegt werden sollen.

Besonders vorteilhaft ist es, den Sondenträger so auszubilden, daß er zusätzlich als Antenne dienen kann. Wird als Sondenträger eine Teleskopeinrichtung mit mehreren Teleskopelementen eingesetzt, ist eine nach diesen Funktionen getrennte Bewegung der Teleskopelemente etwa nach folgendem Muster von Vorteil:

Mit Einschalten der Zündung des Kraftfahrzeuges fährt derjenige Teil der Teleskopeinrichtung aus, der den Ausleger mit Magnetfeldsonde trägt, so daß die Funktion der Richtungsbestimmung sichergestellt ist. Wird zusätzlich ein sich im Kraftfahrzeug befindliches Radio eingeschaltet, werden zur Realisierung der Antennenfunktion die zusätzlich vorhandenen Teleskopelemente vom Antriebssystem ausgefahren und umgekehrt.

Weitere vorteilhafte Ausgestaltungen der Erfindung sind in den abhängigen Ansprüchen gekennzeichnet.

Die Erfindung wird nachfolgend an einem Ausführungsbeispiel näher erläutert, bei dem der Sondenträger als Teleskopeinrichtung ausgebildet ist. Dabei zeigen

FIG 1      den ausgefahrenen Sondenträger in Seitenansicht,

FIG 2      den eingefahrenen Sondenträger im Längsschnitt,

FIG 3      einen Querschnitt entlang Linie III-III in FIG 2,

FIG 4      einen vergrößerten Teilschnitt des Bereiches IV in FIG 2, jedoch in veränderter Position,

FIG 5      einen Längsschnitt, ähnlich dem in FIG 2, mit einem zusätzlichen Positionsfühler,

FIG 6      einen Schnitt durch ein Antriebssystem, und

FIG 7      eine vergrößerte Ansicht des Ausschnittes VII in FIG 6.

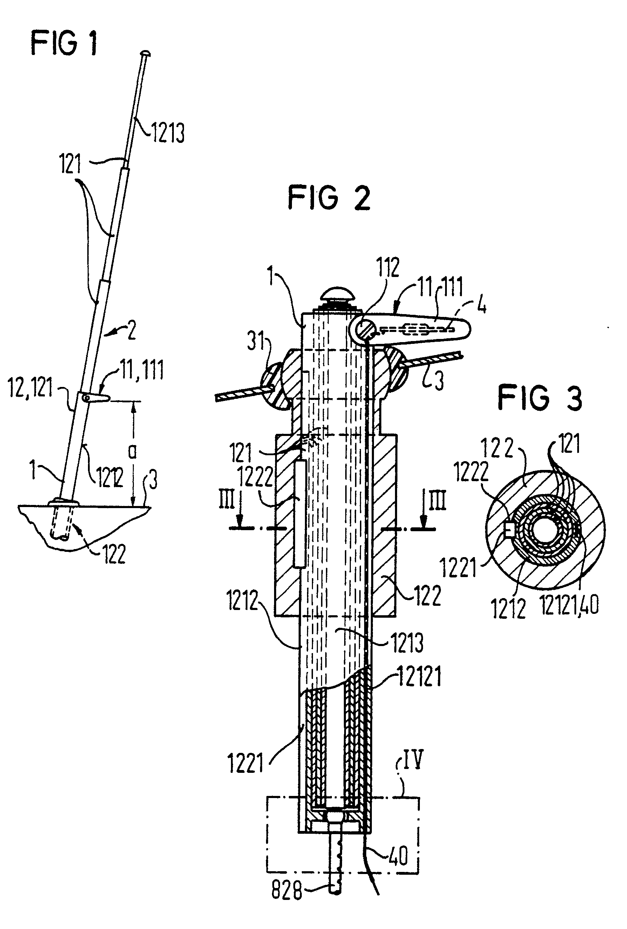

Wie insbesondere die Figuren 1 bis 3 zeigen, besteht der Sondenträger aus einem Distanzstück 12 in Form einer Teleskopeinrichtung und aus einer Sondenkapsel 11, in der eine Magnetfeldsonde 4 untergebracht ist. Die Teleskopeinrichtung besteht aus vier Teleskopelementen 121, von denen ein äußerstes Teleskopelement mit 1212 und ein innerstes Teleskopelement mit 1213 bezeichnet sind. Die Sondenkapsel 11 ist in einem Ausleger 111 untergebracht, der sich am Ende des äußersten Teleskopelementes 1212 befindet. Bei ausgefahrenem äußersten Teleskopelement 1212 - FIG 1 - wird dadurch ein Abstand a zwischen Ausleger 111 und Fahrzeugkarosserie 3 eingehalten.

Die Teleskopeinrichtung wird mit ihrem äußersten Teleskopelement 1212 in einem Führungsteil 122 verdrehsicher geführt. und mit Hilfe einer Feststellschraube 112 in der Vertikalen um eine Horizontalachse einstellbar angebracht ist, so daß die Magnetfeldsonde 4 im Ausleger 111 parallel zur Fahrzeugachse ausgerichtet werden kann.

Die Verdrehsicherung um die Längsachse der konzentrischen Teleskopeinrichtung ist durch ein Feder/Nutsystem erreicht. Das äußerste Teleskopelement 1212 hat dazu eine durchgehende Führungsnut 1221, in die eine Paßfeder 1222 des Führungsteils 122 beim Ein- und Ausfahren der Teleskopeinrichtung eingreift (FIG 3). Das Führungsteil 122 ist durch seine Formgebung in der Karosserie 3 des Kraftfahrzeuges verdrehsicher angebracht. Zwischen Karosserie 3 und Führungsteil 122 befindet sich eine Gummdichtung 31. In der Wandung des äußersten Teleskopelements 1212 sind Zuleitungen 40 der Magnetfeldsonde 4 in einem Kabelkanal 12121 untergebracht.

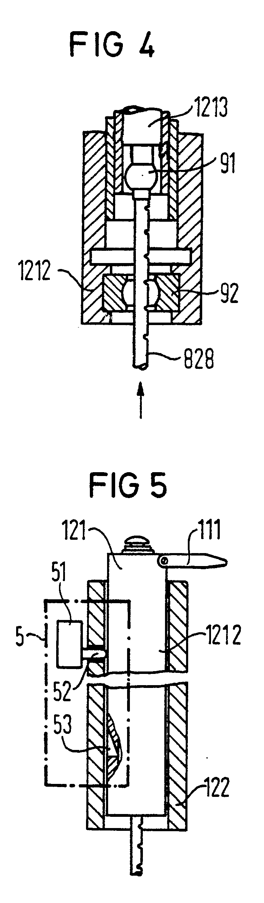

Wie der Abschnitt IV in FIG 2 zeigt, ist das äußerste Teleskopelement 1212 mit dem innersten Teleskopelement 1213 mit Hilfe einer Kupplung gekuppelt, deren Elemente in FIG 4 - auseinandergezogen - dargestellt sind: Das innerste Teleskopelement 1213 weist ein kugelförmiges Einrastelement 91, das äußerste Teleskopelement 1212 eine dazu passende konzentrische Einrastvorrichtung 92 auf, die als Gummiring ausgebildet ist. Der Gummiring ist in einer konzentrischen Nut der Innenwandung des äußersten Teleskopelements, und zwar an dessem unteren Ende, gelagert. Das Einrastelement 91 ist ferner mit einem Nylonzug 828 verbunden.

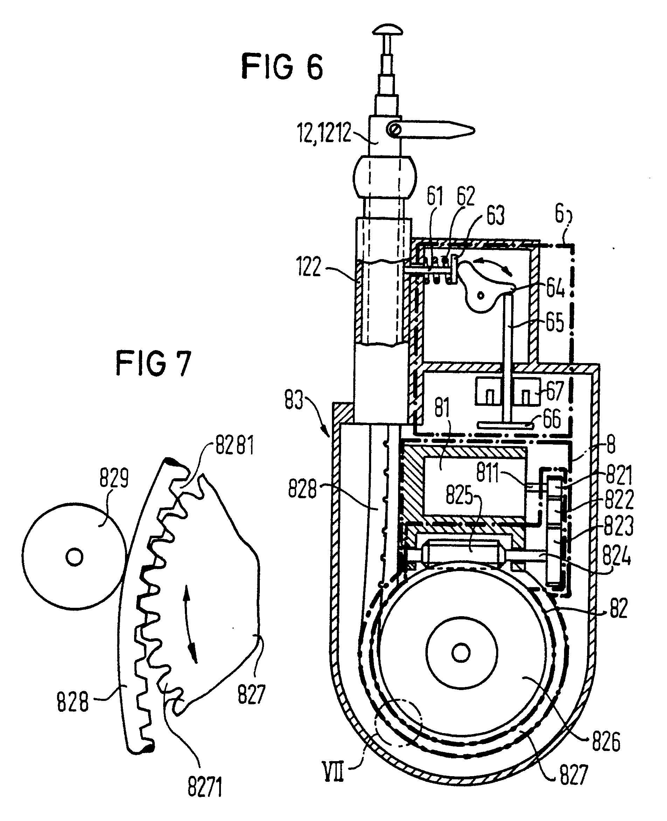

In FIG 5 ist ein Postionsfühler 5 gezeigt, der zur Anzeige der Ausfahrendposition des äußersten Teleskopelements eingesetzt wird. Der Positionsfühler 5 besteht aus einem Mikroschalter 51, dessen Schaltfunktion durch einen Schaltstößel 52 ausgelöst wird. Bei der Ausfahrbewegung des äußersten Teleskopelements 1212 gleitet der am Kopfende abgerundete Schaltstößel 52 in eine sich zunehmend vertiefende Rinne 53, die sich in der Wandung des äußersten Teleskopelements befindet. Dabei legt der angefederte Schaltstößel 52 einen Weg zurück, der ausreicht, den Kontakt des Mikroschalters 51 zu lösen. Hierdurch wird ein Antriebssystem abgeschaltet und die Ausfahrbewegung des äußersten Teleskopelements beendet.

FIG 6 zeigt schematisch ein Antriebssystem 8 für die Teleskopeinrichtung und eine Arretierungseinrichtung 6 zur Fixierung des äußersten Teleskopelements. Die gesamte Anordnung befindet sich in einem Gehäuse 83. Das Antriebssystem besteht aus einem streufeldarmen Elektromotor 81, auf dessen Motorwelle 811 ein Motorzahnrad 821 sitzt. Das Motorzahnrad 821 ist mit Hilfe eines Zahnriemens 822 mit einem Zahnrad 823 kraftschlüssig verbunden. Das Zahnrad 823 sitzt auf der Getriebeachse 824, die mit einer Schnecke 825 starr verbunden ist. Letztere kämmt mit dem zugehörigen Schneckenrad 826, mit dem eine Aufwikkelrolle 827 für einen Nylonzug 828 verbunden ist. Der halbsteife und geführte Nylonzug 828 hat auf einer Längsseite eine Zahnung 8281, die zu Zähnen 8271 an der Aufwickelrolle paßt (FIG 7). Der Nylonzug 828 ist zwischen einer Andruckrolle 829 und der Aufwickelrolle zwangsgeführt. Hierdurch wird die Drehbewegung des Schneckenrads 826 in eine Linearbewegung des Nylonzugs 828 umgesetzt und damit die Teleskopeinrichtung aus- oder eingefahren.

Beim Ausfahren der Teleskopeinrichtung befindet sich das Einrastelement 91 in der Einrastvorrichtung 92, wie in FIG 2 gezeigt. Solange das äußerste Teleskopelement 1212 ausgefahren wird, besteht nur ein kleiner mechanischer Widerstand, der nicht ausreicht, das kugelförmige Einrastelement 91 aus dem Gummiring der Einrastvorrichtung 92 zu drücken. Dadurch ist die Mitnahme aller Teleskopelemente 121 erzwungen, so daß die gesamte Teleskopeinrichtung ausgefahren wird. Erreicht das äußerste Teleskopelement 1212 bei der Ausfahrbewegung seine Ausfahrendposition, wird es arretiert. In dieser Position befindet sich der Ausleger 111 mit Magnetfeldsonde 4 in einem optimal störarmen Abstand a von der Karosserie 3. Die Ausfahrbewegung kann in dieser Position gestoppt werden, so daß nur die Richtungsbestimmung des Kraftfahrzeugs mit Hilfe der Magnetfeldsonde 4 voll funktionsfähig ist.

Bleibt das Antriebssystem der Teleskopeinrichtung weiter aktiv, dann wird das Einrastelement 91 aus der elastischen Einrastvorrichtung herausgedrückt und die Teleskopeinrichtung wird vollständig ausgefahren (FIG 1). Jetzt ist zusätzlich die Antennenfunktion der Teleskopeinrichtung gewährleistet. Die Einfahrbewegung wird analog zur Ausfahrbewegung ausgeführt.

Die Arretierungseinrichtung 6 besteht aus einem Hubmagneten 67, der unter Strom einen Telleranker 66 anzieht. Hierdurch legt die Hubstange 65, die mit dem Telleranker 66 starr verbunden ist, einen Hubweg zurück, der mit Hilfe des Umlenkhebels 64 an einen Sperrstift 61 mit einem Andruckteller 63 weitergegeben wird. Dabei wirkt die auftretende Hubkraft einer Spiralfeder 62 entgegen. Der ausgelenkte Sperrstift 61 greift in eine Bohrung des äußersten Teleskopelements ein. Dadurch wird das äußerste Teleskopelement in einer Position arretiert, die durch die Lage der Bohrung von dem Teleskopelement bestimmt ist.

## Ansprüche

1. Anordnung an einem Kraftfahrzeug für Navigationszwecke, mit
   - einer Magnetfeldsonde (4),
   - einer Sondenkapsel (11) , in welcher die Magnetfeldsonde (4) untergebracht ist,
   - einem Distanzstück (12 bzw. 121 bzw. 1212), an welchem die Sondenkapsel (11) angebracht ist und welches zusammen mit der Sondenkapsel (11) einen Sondenträger (1) bildet, woran die Magnetfeldsonde (4) in deren Betriebszustand mit einem Abstand (a) von der Karosserie (3) des Kraftfahrzeuges angeordnet ist, und
   - einem Führungsteil (122), mit welchem das Distanzstück (12) gehalten und an der Karosserie (3) des Kraftfahrzeuges angebracht ist,
   **dadurch gekennzeichnet, daß**
   - der Sondenträger (1) in die Karosserie (3) zumindest weitgehend versenkbar ist,
   - das Distanzstück (12) zu einer Teleskopeinrichtung (2) mit mindestens einem Teleskopelement (121) gehört,
   - das Führungsteil (122) das Distanzstück (12) und damit die Magnetfeldsonde (4) verdrehsicher - z.B. durch Paßfeder 1222 in Führungsnut 1221 - geschützt festhält,
   - das Führungsteil (122) an der Karosserie (3) verdrehsicher angebracht ist, und
   - Zuleitungen (40) zu der Magnetfeldsonde (4) im Distanzstück (1212) untergebracht sind.

2. Anordnung nach Patentanspruch 1, **dadurch gekennzeichnet, daß**
   - als Sondenkapsel (11) ein Ausleger (111) dient, der um eine Horizontalachse (112) am Distanzstück (12) einstellbar ist.

3. Anordnung nach Patentanspruch 2, **dadurch gekennzeichnet, daß**
   - die Teleskopeinrichtung (2) aus mehreren, nämlich aus einem äußersten Teleskopelement (1212) und mindestens einem inneren Teleskopelement besteht,
   - die Sondenkapsel (11) an dem äußersten Teleskopelement (1212) angebracht ist, und
   - die Zuleitungen (40) zu der Magnetfeldsonde (4) im äußersten Teleskopelement (1212) untergebracht sind.

4. Anordnung nach den Patentansprüchen 2 und 3, **dadurch gekennzeichnet, daß**
   - der Ausleger (111) nahe dem von der Karosserie (3) entfernten Ende des äußersten Teleskopelementes (1212) angebracht ist.

5. Anordnung nach Patentanspruch 2, 3 oder 4, **dadurch gekennzeichnet, daß**
   - ein das Ein- und Ausfahren der Teleskopeinrichtung (2) bewirkendes Antriebssystem (8) durch eine Kupplung mit der Teleskopeinrichtung (2) kuppelbar ist.

6. Anordnung nach Patentanspruch 5, **dadurch gekennzeichnet, daß**
   - als Kupplung ein kugelförmiges Einrastelement (91) und eine dazu passende Einrastvorrichtung (92) dient.

7. Anordnung nach einem der Patentansprüche 1 bis 6, **dadurch gekennzeichnet, daß**
   - mindestens ein Positionsfühler (5) zur Ermittlung einer im Betriebszustand der Magnetfeldsonde (4) gegebenen Endposition des Sondenträgers (1) vorgesehen ist.

8. Anordnung nach Patentanspruch 7,

**dadurch gekennzeichnet, daß**
- mindestens eine Arretierungseinrichtung (6) zur Fixierung des Sondenträgers (1) in seiner Endposition vorgesehen ist.

9. Anordnung nach einem der Patentansprüche 1 bis 8,
   **dadurch gekennzeichnet, daß**
   - mindestens ein Teil des Distanzstückes (12) bzw. der Teleskopeinrichtung (2) zusätzlich als Antenne ausgebildet ist.

10. Anordnung nach einem der Patentansprüche 1 bis 9,
    **dadurch gekennzeichnet, daß**
    - der Sondenträger (1) aus einem Material besteht, welches nicht zu den Materialien mit ferromagnetischen oder ferrimagnetischen Eigenschaften gehört.

**Claims**

1. Arrangement on a motor vehicle for navigational purposes, having
   - a magnetic field probe (4),
   - a probe capsule (11), in which the magnetic field probe (4) is accommodated,
   - a spacer (12 or 121 or 1212), on which the probe capsule (11) is mounted and which, together with the probe capsule (11), forms a probe carrier (1), on which the magnetic field probe (4) is arranged in its operating state at a distance (a) from the body (3) of the motor vehicle, and
   - a guide part (122), with which the spacer (12) is held and mounted on the body (3) of the motor vehicle,
   characterised in that
   - the probe carrier (1) can be countersunk at least to a large extent into the vehicle body (3),
   - the spacer (12) is part of the telescopic device (2) having at least one telescopic element (121),
   - the guide part (122) holds the spacer (12) and thus the magnetic field probe (4) protected in a rotationally secure manner - e.g. by means of a fitted key 1222 in guide groove 1221,
   - the guide part (122) is mounted in a rotationally secure manner on the vehicle body (3), and
   - feed lines (40) to the magnetic field probe (4) are accommodated in the spacer (1212).

2. Arrangement according to Patent Claim 1, characterised in that an extension arm (111) which can be adjusted about a horizontal axis (112) on the spacer (12) serves as probe capsule (11).

3. Arrangement according to Patent Claim 2, characterised in that
   - the telescopic device (2) consists of a plurality of telescopic elements, namely of an outermost telescopic element (1212) and at least one inner telescopic element,
   - the probe capsule (11) is mounted on the outermost telescopic element (1212), and
   - the feed lines (4) to the magnetic field probe (4) are accommodated in the outermost telescopic element (1212).

4. Arrangement according to Patent Claims 2 and 3, characterised in that
   - the extension arm (111) is mounted near to the end of the outermost telescopic element (1212) which is remote from the vehicle body (3).

5. Arrangement according to Patent Claim 2, 3 or 4, characterised in that
   - the drive system (8) which brings about the moving in and moving out of the telescopic device (2) can be coupled to the telescopic device (2) by means of a coupling.

6. Device according to Patent Claim 5, characterised in that
   - a spherical engagement element (91) and an engagement device (92) which matches it serve as coupling.

7. Arrangement according to one of Patent Claims 1 to 6, characterised in that
   - at least one position sensor (5) for determining a final position of the probe carrier (1) which is reached in the operating state of the magnetic field probe (4) is provided.

8. Arrangement according to Patent Claim 7, characterised in that
   - at least one locking device (6) is provided for fixing the probe carrier (1) in its final position.

9. Arrangement according to one of Patent Claims 1 to 8, characterised in that
   - at least one part of the spacer (12) or of the telescopic device (2) is additionally designed as an aerial.

10. Arrangement according to one of Patent Claims 1 to 9, characterised in that
- the probe carrier (1) consists of a material which does not belong to the class of materials having ferromagnetic or ferrimagnetic properties.

**Revendications**

1. Dispositif de navigation monté sur un véhicule automobile et comportant
- une sonde magnétique (4),
- une capsule (11), dans laquelle est logée la sonde magnétique (4),
- une entretoise (12 ou 121 ou 1212), sur laquelle est montée la capsule (11) de la sonde et qui forme, conjointement avec cette capsule, un support de sonde (1), sur lequel, dans son état de fonctionnement, la sonde magnétique (4) est montée en étant séparée par une distance (a) de la carrosserie (3) du véhicule automobile, et
- un élément de guidage (122), à l'aide duquel l'entretoise (12) est maintenue et est montée sur la carrosserie (3) du véhicule automobile, caractérisé par le fait que
- le support de sonde (1) peut être inséré au moins dans une large mesure en renfoncement dans la carrosserie (3),
- l'entretoise (12) fait partie d'un dispositif télescopique (2) comportant au moins un élément télescopique (121),
- l'élément de guidage (122) maintient fermement l'entretoise (12) et par conséquent la sonde magnétique (4) en empêchant toute rotation -par exemple à l'aide d'une clavette parallèle (1222) insérée dans une rainure de guidage (1221),
- l'élément de guidage (122) est monté sur la carrosserie (3) en étant bloqué en rotation, et
- des conducteurs d'alimentation (40) aboutissant à la sonde magnétique (4) sont logés dans l'entretoise (1212).

2. Dispositif suivant la revendication 1, caractérisé par le fait que
- un bras en console (111), qui peut être réglé autour de l'axe horizontal (112) sur l'entretoise (12), est utilisé comme capsule (11) de la sonde.

3. Dispositif suivant la revendication 2, caractérisé par le fait que
- le dispositif télescopique (2) est constitué par plusieurs éléments télescopiques, à savoir un élément télescopique le plus extérieur (1212) et au moins un élément télescopique intérieur,
- la capsule (11) de la sonde est montée sur l'élément télescopique le plus extérieur (1212), et
- les conducteurs d'alimentation (40) aboutissant à la sonde magnétique (4) sont logés dans l'élément télescopique le plus extérieur (1212).

4. Dispositif suivant les revendications 2 et 3, caractérisé par le fait que
- le bras en console (111) est monté à proximité de l'extrémité, éloignée de la carrosserie (3), de l'élément télescopique le plus extérieur (1212).

5. Dispositif suivant la revendication 2,3 ou 4, caractérisé par le fait que
- un système d'entraînement (8), qui réalise le retrait et le déploiement du dispositif télescopique (2), peut être accouplé au moyen d'un accouplement au dispositif télescopique (2).

6. Dispositif suivant la revendication 5, caractérisé par le fait que
- comme accouplement, on utilise un élément sphérique d'encliquetage (91) et un dispositif d'encliquetage (92) adapté à cet élément.

7. Dispositif suivant l'une des revendications 1 à 6, caractérisé par le fait
- qu'il est prévu au moins un capteur de position (5) servant à déterminer une position finale du support de sonde (1), déterminée dans l'état de fonctionnement de la sonde magnétique (4).

8. Dispositif suivant la revendication 7, caractérisé par le fait que
- au moins un dispositif de blocage (6) est prévu pour fixer le support de sonde (1) dans sa position finale.

9. Dispositif suivant l'une des revendications 1 à 8, caractérisé par le fait que
- au moins une partie de l'entretoise (12) ou du dispositif télescopique (2) est agencée en outre sous la forme d'une antenne.

10. Dispositif suivant l'une des revendications 1 à 9, caractérisé par le fait que

- le support de sonde (1) est réalisé en un matériau qui ne fait pas partie des matériaux possédant des propriétés ferromagnétiques ou ferrimagnétiques.

# FIG 1

# FIG 2

# FIG 3

# FIG 4

1213

91

1212

92

828

# FIG 5

121   111

51

5

1212

52

53

122

FIG 6

FIG 7